Europäisches Patentamt

European Patent Office

Office européen des brevets

(19)

(11) **EP 0 971 992 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(21) Anmeldenummer: **98917007.1**

(22) Anmeldetag: **19.03.1998**

(51) Int Cl.⁷: **C09D 183/04**, C09D 183/14, C08G 77/20

(86) Internationale Anmeldenummer:
**PCT/EP98/01597**

(87) Internationale Veröffentlichungsnummer:
**WO 98/42789 (01.10.1998 Gazette 1998/39)**

(54) **GEGEBENFALLS MQ-SILICONHARZE ENTHALTENDE VERNETZBARE ZUSAMMENSETZUNGEN**

CROSS-LINKABLE COMPOUNDS, OPTIONALLY CONTAINING MQ SILICON RESINS

COMPOSES RETICULABLES CONTENANT EVENTUELLEMENT DES RESINES DE SILICONE MQ

(84) Benannte Vertragsstaaten:
**BE DE ES FR GB IT NL**

(30) Priorität: **20.03.1997 DE 19711694**
**20.03.1997 DE 19711695**

(43) Veröffentlichungstag der Anmeldung:
**19.01.2000 Patentblatt 2000/03**

(73) Patentinhaber: **Wacker-Chemie GmbH**
**81737 München (DE)**

(72) Erfinder:
 • **HERZIG, Christian**
  **D-83329 Waging (DE)**
 • **ZOELLNER, Oliver**
  **D-84359 Simbach (DE)**
 • **HOCKEMEYER, Friedrich**
  **D-84533 Marktl (DE)**

 • **BANFIC, Robert**
  **D-84508 Burgkirchen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 005 787    EP-A- 0 601 938**
**DE-A- 4 128 932    DE-A- 4 436 817**
**US-A- 4 123 604**

Bemerkungen:
Die Akte enthält technische Angaben, die nach dem Eingang der Anmeldung eingereicht wurden und die nicht in dieser Patentschrift enthalten sind.

Printed by Jouve, 75001 PARIS (FR)

**Beschreibung**

Die Erfindung betrifft vernetzbare Zusammensetzungen enthaltend

($A_1$) aliphatisch ungesättigte Kohlenwasserstoffreste aufweisende Organosiliciumverbindungen
und gegebenenfalls
($A_2$) MQ-Siliconharz,
(B) Si-gebundene Wasserstoffatome aufweisende Organosiliciumverbindungen,
(C) die Anlagerung von Si-gebundenen Wasserstoff an aliphatische Mehrfachbindung fördernde Katalysatoren,
und gegebenenfalls
(D) die Anlagerung von Si-gebundenen Wasserstoff an aliphatische Mehrfachbindung bei Raumtemperatur verzögernde Mittel

und deren Verwendung zur Herstellung von klebrige Stoffe abweisenden Überzügen.

In EP-B 403890 (Bayer AG; veröffentlicht am 16.03.1994) bzw. der entsprechenden US-A 5,077,369 sowie EP-A 640662 (Bayer AG; offengelegt am 01.03.1995) werden additionsvernetzende Organopolysiloxanmischungen zur Herstellung von haftungsmindernden Beschichtungen beschrieben. Die in den Mischungen enthaltenen Organopolysiloxane sind verzweigt, wobei die Verzweigungsstellen trifunktionelle Monoorganosiloxygruppen, sogenannte T-Einheiten, bzw. tetrafunktionelle Siloxygruppen, sogenannte Q-Einheiten, darstellen. Desweiteren besitzen sie Triorganosiloxygruppen, sogenannte M-Einheiten, als Endgruppen, die mindestens einen ungesättigten Kohlenwasserstoffrest enthalten.

In US-A 5,082,915 (Shin-Etsu Chemical Company, Ltd.; ausgegeben am 21.01.1992) sind Papierbeschichtungsmassen beschrieben, die ein verzweigtes Organopolysiloxan mit mindestens zwei Si-gebundenen Alkenylgruppen und mindestens einer SiC-gebundenen Siloxanseitenkette der Formel $(CH_2)_m$- $(R^1_2SiO)_n$-$SiR^1_3$ je Molekül enthalten, wobei $R^1$ ein einwertiger Kohlenwasserstoffrest, bevorzugt ein Methylrest, m eine ganze Zahl von 2 bis 8 und n eine ganze Zahl von 5 bis 100 bedeutet.

Aus EP-A 761 790 (Dow Corning Corporation; offengelegt am 12. März 1997) sind vernetzbare Siliconbeschichtungszusammensetzungen bekannt, die Organopolysiloxane mit Si-gebundenen Vinyl- oder höheren Alkenylgruppen und SiC-gebundenen Gruppen der Formel $-(CH_2)_nSi(OR)_3$ (wobei R ein einwertiger Kohlenwasserstoffrest und n eine ganze Zahl von 2 bis 20 bedeutet) enthalten.

Die Verwendung von MQ-Siliconharzen als Mittel zur Einstellung der Trennkraft in Beschichtungszusammensetzungen ist aus US-A 4,123,604 (Dow Corning Cooperation; ausgegeben am 31. Oktober 1978), EP-B 535 687 (Wacker-Chemie GmbH; veröffentlicht am 15. Juni 1994) und EP-B 607 869 (Wacker-Chemie GmbH; veröffentlicht am 5. April 1995) bekannt.

In DE-A 44 36 817 sind Organopolysiloxanharzlösungen, die 1-Alkene mit 10 bis 14 Kohlenstoffatomen enthalten und frei sind von aromatischen Kohlenwasserstoffen, beschrieben und deren Verwendung in vernetzbaren Organopolysiloxanzusammensetzugnen, aus denen klebrige Stoffe abweisende Überzüge hergestellt werden.

Es bestand die Aufgabe, neue Zusammensetzungen auf Grundlage von Organosiliciumverbindungen bereitzustellen, die durch die Anlagerung von Si-gebundenen Wasserstoff an aliphatische Mehrfachbindung in Gegenwart von Katalysatoren vernetzen. Ferner bestand die Aufgabe, neue Zusammensetzungen für die Herstellung von klebrige Stoffe abweisenden Überzügen bereitzustellen. Des weiteren bestand die Aufgabe, abhäsive Beschichtungszusammensetzungen bereitzustellen, die abriebfeste Überzüge ergeben, d.h. auf dem Untergrund haften, so daß sie durch mechanische Einflüße, wie z.B. durch Reiben, nicht vom Untergrund getrennt werden können, damit sie beim Abziehen darauf befindlicher, mit Klebstoff versehener Träger, wie z.B. Etiketten, nicht teilweise abgelöst werden und so die Klebkraft der Etiketten vermindern. Weiterhin bestand die Aufgabe, abhäsive Beschichtungszusammensetzungen bereitzustellen, die klebfreie, gut ausgehärtete Überzüge ergeben. Die Aufgabe wird durch die Erfindung gelöst.

Gegenstand der Erfindung sind vernetzbare Zusammensetzungen enthaltend

($A_1$) aliphatisch ungesättigte Kohlenwasserstoffreste aufweisende lineare Organopolysiloxane der allgemeinen Formel

$$R^1{}_aR_{3-a}SiO(R_2SiO)_c[R_2Si\text{-}Y\text{-}SiR_2O(R_2SiO)_c]_dSiR_{3-b}R^1{}_b \qquad (I)$$

wobei R gleich oder verschieden sein kann, einen einwertigen, gegebenenfalls halogenierten Kohlenwasserstoffrest mit 1 bis 18 Kohlenstoffatomen je Rest, der frei von endständigen aliphatischen Kohlenstoff-Kohlenstoff-Mehrfachbindungen ist, bedeutet,

$R^1$ einen einwertigen aliphatisch ungesättigten Kohlenwasserstoffrest mit 2 bis 14 Kohlenstoffatomen je Rest bedeutet,

Y einen zweiwertige organische Rest, der frei von endständigen aliphatischen Kohlenstoff-Kohlenstoff-Mehrfachbindungen ist, bedeutet,

a 0 oder 1 ist,

b 0 oder 1 ist,

und die Summe a+b je Molekül 1 oder 2 ist,

c eine ganze Zahl im Wert von 1 bis 1000 ist und

d 0 oder eine ganze Zahl im Wert von 1 bis 10 ist,

und gegebenenfalls

$(A_2)$ MQ-Siliconharze, welche in $(A_1)$ löslich sind,

aus Einheiten der allgemeinen Formel

$$R_3SiO_{1/2} \text{ (IV)}, \quad R^1R_2SiO_{1/2} \text{ (V) und } SiO_2 \text{ (VI)},$$

wobei R und $R^1$ die oben dafür angegebene Bedeutung haben, mit der Maßgabe, daß

ohne Mitverwendung von MQ-Siliconharzen $(A_2)$ die Summe a+b in Formel (I) durchschnittlich 1,3 bis 1,9 ist, und daß

bei Mitverwendung von MQ-Siliconharzen $(A_2)$ die Summe a+b in Formel (I) durchschnittlich 1,0 bis 1,9 ist,

(B) Si-gebundene Wasserstoffatome aufweisende Organosiliciumverbindungen,

(C) die Anlagerung von Si-gebundenen Wasserstoff an aliphatische Mehrfachbindung fördernde Katalysatoren, und gegebenenfalls

(D) die Anlagerung von Si-gebundenen Wasserstoff an aliphatische Mehrfachbindung bei Raumtemperatur verzögernde Mittel.

Gegenstand der Erfindung ist weiterhin ein Verfahren zur Herstellung von klebrige Stoffe abweisenden Überzügen durch Auftragen von vernetzbaren Zusammensetzungen enthaltend

$(A_1)$ aliphatisch ungesättigte Kohlenwasserstoffreste aufweisende lineare Organopolysiloxane der allgemeinen Formel

$$R^1{}_aR_{3-a}SiO(R_2SiO)_c[R_2Si\text{-}Y\text{-}SiR_2O(R_2SiO)_c]_dSiR_{3-b}R^1{}_b \qquad \text{(I)}$$

wobei R, $R^1$, Y, a, b, c und d die oben dafür angegebene Bedeutung haben, und gegebenenfalls

$(A_2)$ MQ-Siliconharze, welche in $(A_1)$ löslich sind,

aus Einheiten der allgemeinen Formel

$$R_3SiO_{1/2} \text{ (IV)}, \quad R^1R_2SiO_{1/2} \text{ (V) und } SiO_2 \text{ (VI)},$$

wobei R und $R^1$ die oben dafür angegebene Bedeutung haben, mit der Maßgabe, daß

ohne Mitverwendung von MQ-Siliconharzen $(A_2)$ die Summe a+b in Formel (I) durchschnittlich 1,3 bis 1,9 ist, und daß

bei Mitverwendung von MQ-Siliconharzen $(A_2)$ die Summe a+b in Formel (I) durchschnittlich 1,0 bis 1,9 ist,

(B) Si-gebundene Wasserstoffatome aufweisende Organosiliciumverbindungen,

(C) die Anlagerung von Si-gebundenen Wasserstoff an aliphatische Mehrfachbindung fördernde Katalysatoren, und gegebenenfalls

(D) die Anlagerung von Si-gebundenen Wasserstoff an aliphatische Mehrfachbindung bei Raumtemperatur verzögernde Mittel

auf die klebrige Stoffe abweisend zu machenden Oberflächen und anschließende Härtung der vernetzbaren Zusammensetzung.

Die erfindungsgemäßen, aliphatisch ungesättigte Kohlenwasserstoffreste aufweisenden linearen Organopolysiloxane $(A_1)$ besitzen vorzugsweise eine Viskosität von 5 bis 20 000 $mm^2/s$ bei 25°C, bevorzugt 20 bis 1 000 $mm^2/$

s bei 25°C, besonders bevorzugt 20 bis 500 mm²/s bei 25°C.

Die erfindungsgemäßen Organopolysiloxane weisen vorzugsweise Jodzahlen zwischen 1 und 80, bevorzugt 4 und 15, auf, wobei die Jodzahl die bei der Addition an die Doppelbindung verbrauchte Jodmenge in Gramm pro 100 Gramm eingesetztes, erfindungsgemäßes Organopolysiloxan angibt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der terc.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, sowie der $\alpha$-und der $\beta$-Phenylethylrest.

Bei dem Rest R handelt es sich bevorzugt um den Methylrest.

Beispiele für halogenierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m-, und p-Chlorphenylrest.

Vorzugsweise ist Y zweiwertiger Kohlenwasserstoffrest, der ein oder mehrere separate Sauerstoffatome enthalten kann.

Beispiele für Reste Y sind solche der Formel $-CH_2CH_2-$, $-CH(CH_3)-$, $-(CH_2)_4-$, $-(CH_2)_5-$, $-(CH_2)_6-$, $-(CH_2)_8-$, $-(CH_2)_{10}-$, $-(CH_2)_{12}-$, $-(CH_2)_3O(CH_2)_3-$, $1,3-(CH_2CH_2)_2(C_6H_4)$, $1,4-(CH_2CH_2)_2(C_6H_4)$, $1,3-(CH_2CHCH_3)_2(C_6H_4)$, wobei die Reste der Formel $-CH_2CH_2-$, $-CH(CH_3)-$, $-(CH_2)_6-$, $-(CH_2)_8-$ bevorzugt sind und der Rest der Formel $-CH_2CH_2-$ besonders bevorzugt ist.

Die Reste R[1] weisen vorzugsweise eine endständige Doppelbindung auf. Beispiele für Reste R[1] sind der Vinyl-, Allyl-, 3-Butenyl-, 5-Hexenyl-, 7-Octenyl-, 9-Decenyl-, 11-Dodecenyl-, 3-Allyloxypropyl-, 2-(3-Vinylphenyl)ethyl- und der 2-(4-Vinylphenyl)ethylrest, wobei der Vinyl- und der 5-Hexenylrest bevorzugt sind und der Vinylrest besonders bevorzugt ist.

Wenn MQ-Siliconharze (A$_2$) nicht mitverwendet werden, weisen die Organopolysiloxane (A$_1$) als Endgruppen durchschnittlich 65 bis 95 Mol-% Reste R[1], vorzugsweise $\omega$-Alkenylendgruppen, (bzw. als Endgruppen 35 bis 5 Mol-% Reste R, bevorzugt Methylendgruppen) auf, was einer durchschnittlichen Summe a+b von 1,3 bis 1,9 entspricht. Bevorzugt ist die Summe a+b durchschnittlich 1,3 bis 1,8.

Wenn MQ-Siliconharze (A$_2$) mitverwendet werden, weisen die Organopolysiloxane (A$_1$) als Endgruppen durchschnittlich 50 bis 95 Mol-% Reste R[1], vorzugsweise $\omega$-Alkenylendgruppen, (bzw. als Endgruppen 50 bis 5 Mol-% Reste R, bevorzugt Methylendgruppen) auf, was einer durchschnittlichen Summe a+b von 1,0 bis 1,9 entspricht. Bevorzugt ist die Summe a+b durchschnittlich 1,0 bis 1,5, insbesondere 1,1 bis 1,4.

Bei den erfindungsgemäßen Zusammensetzungen wird bevorzugt ein Gemisch von verschiedenen Organopolysiloxanen (A$_1$) eingesetzt.

Vorzugsweise ist c eine ganze Zahl im Wert von 10 bis 300, bevorzugt 20 bis 150.

Vorzugsweise ist d 0 oder eine ganze Zahl im Wert von 1 bis 3, bevorzugt ist d 0.

Verfahren zur Herstellung von linearen Organopolysiloxanen der Formel (I) mit d gleich 0 sind dem Fachmann bekannt. Ein bevorzugtes Verfahren ist die durch Säuren katalysierte Equilibrierung von Polydialkylsiloxanen mit Alkylendgruppen mit Polydialkylsiloxanen mit $\omega$-Alkenylendgruppen.

Das Verhältnis von M-Einheiten der Formel (IV) und (V) zu Q-Einheiten der Formel (VI) beträgt vorzugsweise 0,5 bis 1,5, bevorzugt 0,5 bis 1,0. Das Verhältnis von gesättigten M-Einheiten der Formel (IV) zu ungesättigten M-Einheiten der Formel (V) beträgt vorzugsweise 5 bis 20, bevorzugt 5 bis 10.

Die MQ-Siliconharze können geringe Mengen an T-Einheiten der Formel $RSiO_{3/2}$ und D-Einheiten der Formel $R_2SiO$ enthalten.

Verfahren zur Herstellung der MQ-Siliconharze (A$_2$) sind in der eingangs erwähnten EP-B 535 687 beschrieben und gehören daher zum Offenbarungsgehalt dieser Anmeldung.

Werden MQ-Siliconharze (A$_2$) mitverwendet, werden die MQ-Siliconharze (A$_2$) in Mengen von vorzugsweise 40 bis 60 Gew.-%, bevorzugt 50 bis 55 Gew.-%, jeweils bezogen auf das Gesamtgewicht der Bestandteile (A$_1$) und (A$_2$) eingesetzt.

Hohe MQ-Siliconharzkonzentrationen führen zu stark erhöhten Viskositäten, so daß bei Einsatz von mehr als 60 Gew.-% MQ-Siliconharz (A$_2$) üblicherweise nicht mehr ohne Lösungsmittelzusatz ausgekommen werden kann.

Die Mitverwendung von MQ-Siliconharzen (A$_2$) hat den Vorteil, daß die Trennkraft der abhäsiven Beschichtungen eingestellt werden kann.

Als Bestandteil (B) können auch bei den erfindungsgemäßen vernetzbaren Zusammensetzungen die gleichen Si-gebundene Wasserstoffatome aufweisenden Organopolysiloxane verwendet werden, die bei allen bisher bekannten Zusammensetzungen aus aliphatisch ungesättigte Kohlenwasserstoffreste, wie Vinylgruppen, aufweisenden Organopolysiloxanen, Si-gebundene Wasserstoffatome aufweisenden Organopolysiloxanen und die Anlagerung von Si-gebundenem Wasserstoff an aliphatische Mehrfachbindung fördernde Katalysatoren eingesetzt werden konnten.

Vorzugsweise enthalten die Organopolysiloxane (B) mindestens 3 Si-gebundene Wasserstoffatome.

Als Bestandteil (B) werden vorzugsweise Organopolysiloxane aus Einheiten der Formel

$$H_e R_f SiO_{\frac{4-(e+f)}{2}} \tag{II},$$

wobei R die oben dafür angegebene Bedeutung hat,

e 0 oder 1,
f 0, 1, 2 oder 3 und
die Summe e+f nicht größer als 3 ist,

bevorzugt solche der Formel

$$H_g R_{3-g} SiO(SiR_2O)_k(SiRHO)_1 SiR_{3-g} H_g \tag{III}$$

wobei

R die oben dafür angegebene Bedeutung hat,
g O oder 1,
k O oder eine ganze Zahl von 1 bis 100 und
l O oder eine ganze Zahl von 1 bis 100 ist,

oder Si-gebundene Wasserstoffatome aufweisende Organosiliciumverbindungen, wie sie in der deutschen Anmeldung mit dem Aktenzeichen 196 02 663.6 der Anmelderin beschrieben sind oder Mischungen aus den oben genannten Organopolysiloxanen und Organosiliciumverbindungen verwendet.

Beispiele für Organopolysiloxane (B) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Verfahren zum Herstellen von Organopolysiloxanen (B), auch von solchen Organopolysiloxanen (B) der bevorzugten Art, sind allgemein bekannt.

Organosiliciumverbindungen (B) werden vorzugsweise in Mengen von 0,5 bis 6, bevorzugt 1 bis 3, besonders bevorzugt 1,2 bis 2,5 Grammatom Si-gebundenen Wasserstoffs je Mol Rest $R^1$ in den aliphatisch ungesättigte Kohlenwasserstoffreste aufweisenden Organopolysiloxanen (A) eingesetzt.

Als die Anlagerung von Si-gebundenem Wasserstoff an aliphatische Mehrfachbindung fördernde Katalysatoren (C) können auch bei den erfindungsgemäßen Zusammensetzungen die gleichen Katalysatoren verwendet werden, die auch bei den bisher bekannten Zusammensetzungen zum Vernetzen von aliphatische Mehrfachbindungen enthaltenden Organosiliciumverbindungen mit Verbindungen, die Si-gebundenen Wasserstoff enthalten, zur Förderung der Vernetzung eingesetzt werden konnten. Bei den Katalysatoren (C) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Organopolysiloxane (A) und (B) eingesetzt.

Als die Anlagerung von Si-gebundenem Wasserstoff an aliphatische Mehrfachbindung bei Raumtemperatur verzögernde Mittel, sogenannte Inhibitoren (D), können auch bei den erfindungsgemäßen Zusammensetzungen alle Inhibitoren gegebenenfalls verwendet werden, die auch bisher für den gleichen Zweck verwendet werden konnten. Beispiele für Inhibitoren sind 1,3 -Divinyl-1,1,3,3-tetramethyidisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimechyl-1-hexin-3-ol, 3,7-Dimethyl-oct-1-in-6-en-3-ol, Inhibitoren gemäß US-A 2,476,166, wie eine Mischung aus Diallylmaleinat und Vinylacetat, und Inhibitoren gemäß US 4,504,645, wie Maleinsäuremonoester.

Vorzugsweise wird der Inhibitor (D) in Mengen von 0,001 bis 10 Gew.-%, bezogen auf das Gesamtgewicht der Organopolysiloxane (A) und (B), eingesetzt.

Beispiele für weitere Bestandteile, die bei den erfindungsgemäßen Zusammensetzungen mitverwendet werden können, sind Lösungsmittel, Haftvermittler und Pigmente.

Die bei den erfindungsgemäßen Zusammensetzungen gegebenenfalls mitverwendeten Lösungsmittel können die gleichen Lösungsmittel sein, die bei den bisher bekannten Zusammensetzungen aus aliphatisch ungesättigte Kohlenwasserstoffreste ausweisenden Organopolysiloxanen, Si-gebundenen Wasserstoff aufweisenden Organopolysiloxanen und die Anlagerung von Si-gebundenem Wasserstoff an aliphatische Doppelbindung fördernde Katalysatoren verwendet werden konnten. Beispiele für solche Lösungsmittel sind Benzine, z. B. Alkangemische mit einem Siedebereich von 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der aliphatisch ungesättigte Kohlenwasserstoffreste aufweisenden Organopolysiloxane (A), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50 bis 150°C, bevorzugt bei 80 bis 150°C.
Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Die erfindungsgemäßen Zusammensetzungen haben den Vorteil, daß nach der Vernetzung Beschichtungen erhalten werden, die abriebfest sind. Weiterhin werden klebfreie und gut ausgehärtete Überzüge erhalten, so daß die Klebkraft der Klebstoffe, die mit den Überzügen in Berührung kommen praktisch nicht beeinträchtigt wird.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, dieimRahmen derErfindung behandelt werden können, kann es sich um Oberflächen beliebiger bei Raumtemperatur und 1012 mbar (abs.) fester Stoffe handeln. Beispiele für derartige Oberflächensind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendige Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist, bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt.

Herstellung der Organopolysiloxane (A):

Polymer I:

Ein Gemisch aus 1200 g eines $\alpha,\omega$-Divinylpolydimethylsiloxans mit einer Viskosität von 217 mm$^2$/s bei 25°C und 100 g eines methylterminierten Polydimethylsiloxans mit einer Viskosität von 346 mm$^2$/s bei 25°C wird mit 50 ppm Phosphornitridchlorid bei 125°C bis zur Viskositätskonstanz equilibriert. Der Katalysator wird neutralisiert, das Rohprodukt filtriert und bei 160°C und 3 hPa von flüchtigen Nebenprodukten befreit. Man erhält ein klares Öl mit einer Viskosität von 180 mm$^2$/s bei 25°C und einer Jodzahl von 6,9. Das Produkt enthält durchschnittlich 94 Mol.-% Vinylendgruppen (a + b = 1,88).

Polymer II:

Die analoge Wiederholung von Beispiel 1 mit nur 700 g des $\alpha,\omega$-Divinylpolydimethylsiloxans liefert ein Polymer mit einer Viskosität von 204 mm$^2$/s bei 25°C und einer Jodzahl von 6,7. Das Produkt enthält durchschnittlich 90 Mol.-% Vinylendgruppe (a + b = 1,80).

Polymer III:

Die analoge Wiederholung von Beispiel 1 mit nur 500 g des $\alpha,\omega$-Divinylpolydimethylsiloxans liefert ein Polymer mit einer Viskosität von 214 mm$^2$/s bei 25°C und einer Jodzahl von 6,0. Das Produkt enthält durchschnittlich 86 Mol.-% Vinylendgruppen (a + b = 1,72).

Polymer IV:

30 g 1,3-Di(5-hexenyl)tetramethyldisiloxan equilibriert man mit 1350 g eines methylterminierten Polydimethylsiloxans einer mittleren Kettenlänge von ca. 900 Siloxyeinheiten unter Phosphornitridchlorid-Katalyse (100 ppm). Aufarbeitung wie in Beispiel 1 ergibt ein klares Siloxanpolymer mit einer Viskosität von 380 mm$^2$/s bei 25°C und einer Jodzahl von 4,1. Das Polymer enthält durchschnittlich 83 Mol.-% 5-Hexenylgruppen (a + b = 1,66).

Polymer V:

600 g eines Siloxanpolymers der durchschnittlichen Zusammensetzung $(HMe_2SiO_{1/2})_{1,8}$ $(Me_3SiO_{1/2})_{0,2}$ $(Me_2SiO)_{48}$ werden mit 24 g 1,5-Hexadien gemischt und auf ca. 60°C erwärmt. Man gibt 15 mg $H_2PtCl_6 \cdot {}_6H_2O$ (gelöst in ca. 2 ml Isopropanol) zu, wonach die Innentemperatur um ca. 22°C steigt. Flüchtige Bestandteile werden bei 130°C und 3 hPa entfernt. Das erhaltene Produkt hat eine Viskosität von 182 mm$^2$/s bei 25°C und eine Jodzahl von 6,3. Es enthält 82 Mol.-% 5-Hexenylgruppen (a + b = 1,64).

Polymer VI:

Beispiel 1 wird wiederholt, indem statt 100 g des methylterminierten Polydimethylsiloxans jetzt 86 g eines methylterminierten Polydimethylsiloxans mit einer Viskosität von 20 mm$^2$/s bei 25°C eingesetzt wird. Nach Aufarbeitung erhält man ein klares farbloses Polymer mit einer Viskosität von 108 mm$^2$/s bei 25°C und einer Jodzahl von 7,9. Das Produkt (VI) enthält durchschnittlich 77 Mol.-% Vinylendgruppen (a + b = 1,54).

Polymer VII:

250 g eines α,ω-Divinylpolydimethylsiloxans der durchschnittlichen Kettenlänge von 29 Siloxyeinheiten werden mit 400 g eines methylterminierten Polydimethylsiloxans der Viskosität 5000 mm$^2$/s bei 25°C unter Katalyse von 50 ppm Phosphornitridchlorid bei 145°C equilibriert. Aufarbeitung nach Beispiel 1 ergibt ein klares Polymer (VII) mit einer Viskosität von 112 mm$^2$/s bei 25°C und einer Jodzahl von 8,7. Es enthält durchschnittlich 90 Mol.-% Vinylendgruppen (a + b = 1,80).

Polymer VIII:

Beispiel 7 wird mit 500 g eines methylterminierten Polydimethylsiloxans der Viskosität 1000 mm$^2$/s bei 25°C statt 5000 mm$^2$/s wiederholt. Die Produktviskosität (VIII) beträgt nun 109 mm$^2$/s bei 25°C bei einer Jodzahl von 7,6. Es enthält durchschnittlich 83 Mol.-% Vinylendgruppen. (a + b = 1,66).

Vergleichspolymer 1:

Man wiederholt Beispiel 8 mit 700 g eines methylterminierten Polydimethylsiloxans einer Viskosität von 205 mm$^2$/s bei 25°C anstatt des Polymers mit 5000 mm$^2$/s. Equilibrierung und Aufarbeitung ergibt ein klares Polymer mit einer Viskosität von 97 mm$^2$/s bei 25°C und einer Jodzahl von 6,6. Das Produkt enthält durchschnittlich 55 Mol.-% Vinylendgruppen pro Molekül (a + b = 1,10).

Vergleichspolymer 2:

= α,ω-Divinylpolydimethylsiloxan mit 98 Siloxaneinheiten (= Kettenlänge 98)

Beispiele 1 bis 3 und Vergleichsversuche 1 und 2:

Es werden die nachfolgenden Formulierungen (Tabelle 1) hergestellt aus den Komponenten A, B, C und D:

> (A) Alkenylfunktionelles Siloxan: Polymer VI, VII, VIII bzw. Vergleichspolymer 1 und 2
> (B) H-Siloxanvernetzer: Polyhydrogenmethylsiloxan (methyl-terminiert) mit 1,54 Gew.-% Si-gebundenem Wasserstoff
> (C) Katalysator:
> Platin-1,3-divinyl-1,1,3,3-tetramethyldisiloxan-Komplex gelöst in α,ω-Divinylpolydimethylsiloxan (1% Pt-Gehalt) (sogenannter Karstedt-Katalysator gemäß US-A 3,775,452)
> (D) Inhibitor: 1-Ethinylcyclohexanol

Die Komponenten werden in der Reihenfolge (A) + (D) + (B) + (C) gemischt.

Tabelle 1:

| Beispiel | 1 | 2 | 3 | Vergleichsversuch 1 | Vergleichsversuch 2 |
|---|---|---|---|---|---|
| Polymer | VII | VIII | VI | Vergleichspolymer 1 | Vergleichspolymer 2 |
| (A) | 100 g | 100 g | 100 g | 100 g | 100 g |
| (B) | 4,5 g | 3,9 g | 4,0 g | 3,4 g | 3,6 g |
| (C) | 1,04 g | 1,04 g | 1,04 g | 1,04 g | 1,04 g |
| (D) | 0,26 g | 0,26 g | 0,26 g | 0,26 g | 0,26 g |
| Mol.-% Vinyl | 90 | 83 | 77 | 55 | 100 |

Das Verhältnis von Si-gebundenem Wasserstoff zu $H_2C=CH$-Gruppen beträgt 2,0. Alle Rezepturen enthalten 0,25 % 1-Ethinylcyclohexanol und haben Gelierzeiten von > 72 h.

Die Mischungen werden in ca. 4 μm Schichtdicke auf Polyesterfolie gerakelt und im Umluftofen bei 85°C während 20 Sekunden gehärtet. Die Ergebnisse sind in Tabelle 2 zusammengefaßt.

Tabelle 2:

| | Extrakt [Gew.-%] | Trennkraft [cN/cm] | | | Trennkrafterhaltung[%] |
|---|---|---|---|---|---|
| | | A 7475 | K 7476 | T 154 | |
| Beispiel 1 | 5,9 | 18 | 11 | 9 | > 100 |
| Beispiel 2 | 11,6 | 16 | 8 | 8 | > 100 |
| Beispiel 3 | 6,5 | 16 | 9 | 8 | > 100 |
| Vergleichsversuch 1 | Siliconbeschichtung ist weich und klebrig | | | | |
| Vergleichsversuch 2 | 4,1 | 8 | 13 | 4 | > 100 |

Extrahierbare Anteile gelten als unvernetzte Bestandteile (Extraktionsmittel: Methylisobutylketon)

Die Trennkräfte gegenüber den drei Tesakleberbändern sowie die Trennkrafterhaltung wurden nach FINAT 10 und 11 abgedruckt in "Suppliers and Users Technical Manual", Juni 1980, Seite 21 bis 24, unter Verwendung von handelsüblichen selbstklebenden (englisch: pressure sensitive) 2,5 cm breiten Klebebändern "Tesafilm A 7475", "Tesafilm K 7476" und "Tesafilm T 154" (Fa. Beiersdorf AG, Hamburg, BRD; der Wortteil "Tesa" ist ein registriertes Warenzeichen) ermittelt.

Der Vergleich zeigt, daß ein zu geringer Gehalt an reaktiven Alkenylgruppen (< 65 Mol.-%) im linearen Organopolysiloxan (A) nur zu unzureichender Aushärtung führt (Vergleichsversuch 1).

Die Qualität der Substrathaftung der gehärteten Filme wird gegenüber mehreren Substraten im Abriebtest bestimmt. Zur Bestimmung des Abriebes werden die beschichteten Substrate mit Daumen und Zeigefinger gespannt. Unter kräftigem Druck wird sodann mit dem Finger der anderen Hand auf dem gestrafften Substrat mehrmals zügig hin und her gerieben. Haftet der Siliconfilm auf der Substratoberfläche schlecht, wird ein Teil des Siliconauftrages abgerieben. Der Abrieb wird entsprechend der Stärke mit den Noten 1-6 beurteilt, wobei eine vollkommen unverletzte Oberfläche mit der Note 1 und ein vollständiger Abrieb mit der Note 6 bewertet wird.

Die Ergebnisse sind in Tabelle 3 zusammengefaßt.

Tabelle 3:

| Beispiel | 1 | 2 | 3 | Vergleichsversuch 2 | Vergleichsversuch 1 |
|---|---|---|---|---|---|
| Bosso 925 | 1 (1) | 1 (1) | 1 (1) | 1-2 (1-2) | 6 |
| Cham 697 | 2-3 (2-3) | 1-2 (1-2) | 1-2 (1-2) | 3 (4-5) | 6 |
| Cham 699 | 1-2 (1-2) | 1 (1-2) | 1 (1) | 2-3 (2-3) | 6 |
| Polyester | 1 (1) | 1 (1) | 1 (1) | 1 (2-3) | 6 |

Abriebbeurteilung: sofort (nach 5 Tagen)

Obwohl Vergleichsversuch 2 auch gute Aushärtung zeigte sind die erfindungsgemäßen Rezepturen im Abriebverhalten erheblich überlegen.

Beispiel 4:

MQ-Harzformulierungen werden in verschiedenen Konzentrationen aus den folgenden Komponenten bereitet:

$A_1$ $\alpha,\omega$-Divinyldimethylpolysiloxan aus 1,2 Mol Vinyldimethylsiloxy-, 0,8 Mol Trimethylsiloxy- und 27 Mol Dimethylsiloxyeinheiten, d.h. 60 Mol % der Endgruppen sind Vinylgruppen (a+b = 1,2 ).

$A_2$ MQ-Harz aus $(CH_3)_3SiO_{1/2}$-Einheiten ($M_1$), $CH_2$=$CH(CH_3)_2SiO_{1/2}$-Einheiten ($M_2$) und $SiO_2$-Einheiten (Q), wobei das Verhältnis der Summe der Einheiten $M_1$+$M_2$ zu den Q-Einheiten 0.7 und das Verhältnis von $M_1$-Einheiten zu $M_2$-Einheiten 1:7,3 beträgt (1400g/C=C-Doppelbindung).

|  | CRA 1 | CRA 2 |
|---|---|---|
| $A_1$ | 50 g | 45 g |
| $A_2$ | 50 g | 55 g |
| Jodzahl | 16,0 | 16,2 |
| Viskosität | 1200 mm$^2$/s (25°C) | 6300mm$^2$/s(25°C) |

| vermischt mit: |  |  |
|---|---|---|
| Vernetzer B | 10,2 g | 10,4 g |
| Katalysator C | 1,1 g | 1,1 g |
| Inhibitor D | 0,1 g | 0,1 g |

B) H-Siloxan aus Methylhydrogensiloxan- und Trimethylsiloxaneinheiten mit 15,4 g Si-gebundenen Wasserstoff/kg

C)  Platin-1,3-Divinyl-1,1,3,3-tetramethyldisiloxan-Komplex (sogenannter Karstedt-Katalysator gemäß US-A 3,775,452) gelöst in $\alpha,\omega$-Divinyldimethylpolysiloxan mit einer Viskosität von 1000 mm$^2$/s bei 25°C (1,0 % Pt-gehalt)

D) 1-Ethinylcyclohexanol.

Die anwendungsfertigen frisch bereiteten Zusammensetzungen enthalten 2,5 g Si-gebundenen Wasserstoff pro Mol Doppelbindung. Sie werden mit einem Glasstab in 4 µm Schichtdicke auf mehrere Substrate gerakelt und bei 85°C im Umluftofen gehärtet. Danach wird das Abriebverhalten geprüft.
Die Qualität der Substrathaftung der gehärteten Filme wird gegenüber mehreren Substraten im Abriebtest bestimmt. Zur Bestimmung des Abriebes werden die beschichteten Substrate mit Daumen und Zeigefinger gespannt. Unter kräftigem Druck wird sodann mit dem Finger der anderen Hand auf dem gestrafften Substrat mehrmals zügig hin und her gerieben. Haftet der Siliconfilm auf der Substratoberfläche schlecht, wird ein Teil des Siliconauftrages abgerieben. Der Abrieb wird entsprechend der Stärke mit den Noten 1-6 beurteilt, wobei eine vollkommen unverletzte Oberfläche mit der Note 1 und ein vollständiger Abrieb mit der Note 6 bewertet wird.
Die Ergebnisse sind in Tabelle 4 und 5 zusammengefaßt.

Tabelle 4:

| 20 Sekunden/85 °C: | Abriebtest, sofort | | Abriebtest, 2 Wochen | |
|---|---|---|---|---|
|  | CRA 1 | CRA 2 | CRA 1 | CRA 2 |
| Papier 925 (Fa.Bosso) | 1 | 1 | 1 | 1 |
| HDPE-Folie Q24000 (Fa. 4P Folie) | 1 | 1 | 1 | 1 |
| Polyesterfolie (Fa. Hoechst) | 1 | 1 | 1 | 1 |

Tabelle 5

| 30 Sekunden /85 °C | Abriebtest, sofort | | Abriebtest, 2 Wochen | |
|---|---|---|---|---|
| | CRA 1 | CRA 2 | CRA 1 | CRA 2 |
| Papier Algrosol 1 | 1 | 1 | 1 | 1 |
| Papier 697 - 125 g/m$^2$ (Fa. Cham) | 1 | 1 | 1 | 1 |
| Papier 699 - 125 g/m$^2$ (Fa. Cham) | 1 | 1 | 1 | 1 |
| 1 = kein Abrieb - 6 = vollständiger Abrieb | | | | |

Die Beschichtungen haften auf allen Substraten perfekt.

Vergleichsversuch 3:

Eine handelsübliche Harzformulierung (CRA 17 erhältlich bei Fa. Wacker-Chemie GmbH) wird 1 : 1 mit einem $\alpha,\omega$-Divinyldimethylpolysiloxan der Viskosität 180 mm$^2$/s bei 25°C gemischt und mit Vernetzer (B) zu einem gleichen SiH / C=C-Verhältnis wie in Beispiel 4 beschrieben, abgemischt. Komponenten (C) und (D) werden in identischen Konzentrationen, wie in Beispiel 4 beschrieben, zugesetzt.

Die frisch bereitete Zusammensetzung wird mit einem Glasstab in einer Schichtdicke von 4 µm auf mehrere Substrate gerakelt und bei 85 °C im Umluftofen gehärtet. Die Substrathaftung wird im Abriebtest, wie in Beispiel 4 beschrieben, bestimmt. Die Ergebnisse sind in Tabelle 6 und 7 zusammengefaßt.

Tabelle 6:

| 20 Sekunden/85 °C: | Abriebtest | |
|---|---|---|
| | sofort | n. 2 Wochen |
| Papier 925 (Fa.Bosso) | 1 | 1 - 2 |
| HDPE-Folie Q2400 (Fa. 4P Folie) | 1 | 4 - 5 |
| Polyesterfolie (Fa. Hoechst) | 5 | 5 |

Tabelle 7:

| 30 Sekunden /85 °C | Abriebtest | |
|---|---|---|
| | sofort | n. 2 Wochen |
| Papier Algrosol 1 | 5 | 5 |
| Papier 697 - 125 g/m$^2$ (Fa. Cham) | 5 - 6 | 6 |
| Papier 699 - - 125 g/m$^2$ (Fa. Cham) | 5 | 5 - 6 |

In fast allen Fällen ist die Substrathaftung sehr schlecht, die Beschichtung unbrauchbar.

**Patentansprüche**

**1.**   Vernetzbare Zusammensetzungen enthaltend

(A$_1$) aliphatisch ungesättigte Kohlenwasserstoffreste aufweisende lineare Organopolysiloxane der allgemeinen Formel

$$R^1{}_aR_{3-a}SiO(R_2SiO)_c[R_2Si\text{-}Y\text{-}SiR_2O(R_2SiO)_c]_dSiR_{3-b}R^1{}_b \qquad (I)$$

wobei

R gleich oder verschieden sein kann, einen einwertigen, gegebenenfalls halogenierten Kohlenwasserstoffrest mit 1 bis 18 Kohlenstoffatomen je Rest, der frei von endständigen aliphatischen Kohlenstoff-Kohlenstoff-Mehrfachbindungen ist, bedeutet,

$R^1$ einen einwertigen aliphatisch ungesättigten Kohlenwasserstoffrest mit 2 bis 14 Kohlenstoffatomen je Rest bedeutet,

Y einen zweiwertige organische Rest, der frei von endständigen aliphatischen Kohlenstoff-Kohlenstoff-Mehrfachbindungen ist, bedeutet,

a 0 oder 1 ist,

b 0 oder 1 ist,

und die Summe a+b je Molekül 1 oder 2 ist,

c eine ganze Zahl im Wert von 1 bis 1000 ist und

d 0 oder eine ganze Zahl im Wert von 1 bis 10 ist,

und gegebenenfalls

$(A_2)$ MQ-Siliconharze, welche in $(A_1)$ löslich sind,

aus Einheiten der allgemeinen Formel

$$R_3SiO_{1/2} \text{ (IV), } R^1R_2SiO_{1/2} \text{ (V) und } SiO_2 \text{ (VI),}$$

wobei R und $R^1$ die oben dafür angegebene Bedeutung haben, mit der Maßgabe, daß ohne Mitverwendung von MQ-Siliconharzen $(A_2)$ die Summe a+b in Formel (I) durchschnittlich 1,3 bis 1,9 ist, und daß bei Mitverwendung von MQ-Siliconharzen $(A_2)$ die Summe a+b in Formel (I) durchschnittlich 1,0 bis 1,9 ist,

(B) Si-gebundene Wasserstoffatome aufweisende Organosiliciumverbindungen,

(C) die Anlagerung von Si-gebundenen Wasserstoff an aliphatische Mehrfachbindung fördernde Katalysatoren,

und gegebenenfalls

(D) die Anlagerung von Si-gebundenen Wasserstoff an aliphatische Mehrfachbindung bei Raumtemperatur verzögernde Mittel.

2. Vernetzbare Zusammensetzungen nach Anspruch 1, dadurch gekennzeichnet, daß $R^1$ ein Vinylrest ist.

3. Vernetzbare Zusammensetzungen nach Anspruch 1 oder 2, dadurch gekennzeichnet, daß d 0 ist.

4. Vernetzbare Zusammensetzungen nach Anspruch 1, 2 oder 3, dadurch gekennzeichnet, daß als MQ-Siliconharze $(A_2)$ solche verwendet werden, bei denen das Verhältnis von M-Einheiten der Formel (IV) und (V) zu Q-Einheiten der Formel (VI) 0,5 bis 1,5 beträgt und das Verhältnis von gesättigten M-Einheiten der Formel (IV) zu ungesättigten M-Einheiten der Formel (V) 5 bis 20 beträgt.

5. Verfahren zur Herstellung von klebrige Stoffe abweisenden Überzügen durch Auftragen von vernetzbaren Zusammensetzungen gemäß einem der Ansprüche 1 bis 4 auf die klebrige Stoffe abweisend zu machenden Oberflächen und anschließende Härtung der vernetzbaren Zusammensetzung.

**Claims**

1. Crosslinkable compositions comprising

$(A_1)$ linear organopolysiloxanes containing aliphatically unsaturated hydrocarbon radicals, of the general formula

$$R^1{}_aR_{3-a}SiO(R_2SiO)_c[R_2Si\text{-}Y\text{-}SiR_2O(R_2SiO)_c]_dSiR_{3-b}R^1{}_b \qquad \text{(I)}$$

where

R can be identical or different and is a monovalent, unsubstituted or halogenated hydrocarbon radical which has from 1 to 18 carbon atoms per radical and is free from terminal aliphatic carbon-carbon multiple bonds,

$R^1$ is a monovalent aliphatically unsaturated hydrocarbon radical having from 2 to 14 carbon atoms per radical,

Y is a divalent organic radical which is free from terminal aliphatic carbon-carbon multiple bonds,

a is 0 or 1,

b is 0 or 1,

and the sum a+b per molecule is 1 or 2,

c is an integer from 1 to 1000 and

d is 0 or an integer from 1 to 10,

and, if desired,

($A_2$) MQ silicone resins which are soluble in ($A_1$), comprising units of the general formula

$$R_3SiO_{1/2} \text{ (IV), } R^1R_2SiO_{1/2} \text{ (V) and } SiO_2 \text{ (VI),}$$

where R and $R^1$ have the meaning indicated above for them, with the proviso that

without the use of MQ silicone resins ($A_2$) the sum a+b in formula (I) is on average from 1.3 to 1.9, and that with the use of MQ silicone resins ($A_2$) the sum a+b in formula (I) is on average from 1.0 to 1.9,

(B) organosilicon compounds containing Si-bonded hydrogen atoms,

(C) catalysts which promote the addition of Si-bonded hydrogen onto aliphatic multiple bond,

and, if desired,

(D) agents which retard the addition of Si-bonded hydrogen onto aliphatic multiple bond at room temperature.

2.  Crosslinkable compositions according to Claim 1, characterized in that $R^1$ is a vinyl radical.

3.  Crosslinkable compositions according to Claim 1 or 2, characterized in that d is 0.

4.  Crosslinkable compositions according to Claim 1, 2 or 3, characterized in that MQ silicone resins ($A_2$) used are those in which the ratio of M units of the formula (IV) and (V) to Q units of the formula (VI) is from 0.5 to 1.5 and the ratio of saturated M units of the formula (IV) to unsaturated M units of the formula (V) is from 5 to 20.

5.  Process for producing coatings which repel tacky substances, by applying crosslinkable compositions according to one of Claims 1 to 4 to the surfaces which are to be made repellent to tacky substances, and then curing the crosslinkable composition.

**Revendications**

1.  Compositions réticulables contenant :

(A$_1$) des organopolysiloxanes linéaires, présentant des radicaux hydrocarbonés aliphatiques insaturés et de formule générale :

$$R^1{}_aR_{3-a}SiO(R_2SiO)_c[R_2Si\text{-}Y\text{-}SiR_2O(R_2SiO)_c]_dSiR_{3-b}R^1{}_b \qquad \text{(I)}$$

dans laquelle

R peut être identique ou différent et signifie un radical hydrocarboné monovalent éventuellement halogéné avec 1 à 18 atomes de carbone par radical, qui est exempt de liaisons multiples carbone-carbone aliphatiques terminales,

$R^1$ signifie un radical hydrocarboné aliphatique insaturé monovalent avec 2 à 14 atomes de carbone par radical,

Y signifie un radical organique divalent, qui est exempt de liaisons multiples carbone-carbone aliphatiques terminales,
a est 0 ou 1,
b est 0 ou 1,
et la somme a + b est de 1 ou 2 par molécule,
c est un nombre entier d'une valeur de 1 à 1 000, et
d est 0 ou un nombre entier d'une valeur de 1 à 10,

et éventuellement

($A_2$) des résines de silicone MQ, qui sont solubles dans ($A_1$) et sont constituées d'unités de formules générales $R_3SiO_{1/2}$ (IV), $R^1R_2SiO_{1/2}$ (V) et $SiO_2$ (VI), où R et $R^1$ ont la signification indiquée ci-dessus à cet effet, à condition que,
sans utilisation conjointe de résines de silicone MQ ($A_2$), 1a somme a + b de 1a formule (I) soit en moyenne de 1,3 à 1,9, et que, lors d'une utilisation conjointe de résines de silicone MQ ($A_2$), 1a somme a + b de la formule (I) soit en moyenne de 1,0 à 1,9,
(B) des composés d'organosilicium présentant des atomes d'hydrogène liés par Si,
(C) des catalyseurs favorisant la fixation d'hydrogène lié par Si sur une liaison multiple aliphatique et, éventuellement,
(D) des agents retardant la fixation d'hydrogène lié par Si sur une liaison multiple aliphatique à température ambiante.

**2.** Compositions réticulables selon la revendication 1, caractérisées en ce que $R^1$ est un radical vinyle.

**3.** Compositions réticulables selon la revendication 1 ou 2, caractérisées en ce que d est 0.

**4.** Compositions réticulables selon la revendication 1, 2 ou 3, caractérisées en ce qu'on utilise, comme résines de silicone MQ ($A_2$), des résines dans lesquelles le rapport des unités M de formules (IV) et (V) aux unités Q de formule (VI) est de 0,5 à 1,5 et le rapport des unités M saturées de formule (IV) aux unités M insaturées de formule (V) est de 5 à 20.

**5.** Procédé de fabrication de couches repoussant les substances adhésives par application de compositions réticulables selon l'une quelconque des revendications 1 à 4 sur les surfaces à rendre répulsives aux substances adhésives et par durcissement subséquent de la composition réticulable.